# EUROPÄISCHE PATENTSCHRIFT

(11) **EP 0 911 192 B1**
(45) Veröffentlichungstag und Bekanntmachung des Hinweises auf die Patenterteilung: **17.12.2003**
(21) Anmeldenummer: 98250377.3
(22) Anmeldetag: 23.10.1998
(51) Int. Cl.: B60C 27/10

(54) **Arretierelement für die Einstell- oder Spannkette einer Reifenkette**
Locking elements for the span-chain of an anti-skid tyre chain
Elément de fermeture de la chaîne de serrage d'une chaîne anti-dérapante

(30) Priorität: 24.10.1997 DE 19748933
(43) Veröffentlichungstag der Anmeldung: 28.04.1999
(73) Patentinhaber: RUD-KETTENFABRIK RIEGER & DIETZ GMBH U. CO., 73432 Aalen-Unterkochen (DE)
(72) Erfinder: Schaffert, Thilo Ernst, 74423 Obersontheim (DE); Liesch, Eugen, 73432 Aalen-Unterkochen (DE)
(74) Vertreter: Böning, Manfred, Prof.Dr.-Ing.

(56) Entgegenhaltungen:
- DE-U- 6 903 899
- US-A- 5 505 511

## Beschreibung

Die Erfindung betrifft ein Arretierelement für die Einstelloder Spannkette einer Reifenkette mit einem Grundkörper, der eine Anschlußöse zu seiner Befestigung an einem im Bereich der Reifenflanke gelegenen Glied der Reifenkette aufweist und mit einer Durchziehöffnung sowie einem in diese mündenden Arretierungsschlitz für die Einstell- oder Spannkette versehen ist.

Aus der EP 0 071 556 ist ein Arretierelement der vorstehenden Art bekannt, bei dem der Grundkörper von einem flachen Stanzteil gebildet wird. Dies bedeutet, daß die Durchziehöffnung, der Arretierungsschlitz und die Anschlußöse sowie ein zusätzlicher Anschlußhaken in einer Ebene liegen, die im wesentlichen senkrecht zur Zugrichtung des die Durchziehöffnung passierenden Spannstranges und zur Flanke des mit der Reifenkette ausgestatteten Rades orientiert ist. Das bekannte Arretierelement hat sich in Fällen bewährt, in denen der Grundkörper in den Verband einer Seitenkette integriert und die Spannkette über die Lauffläche geführt ist. Für den Einsatz in Verbindung mit schweren Reifenketten für geländegängige Fahrzeuge ist es indes weniger geeignet.

Aus einem flachen Stanzteil mit einer Anschlußöse, einer Duchziehöffnung und einem sich an letztere anschließenden Arretierungsschlitz bestehende Arretierelemente sind auch aus der AT 287417 und der DE 3308747 bekannt. Sie verfügen bei senkrecht zur Flanke eines Fahrzeugreifens orientierter Anordnung über die gleichen Nachteile des zuvor beschriebenen Arretierelementes. Zur Vermeidung dieser Nachteile sind bei der Konstruktion nach der DE 3308747 daher zusätzliche Mittel vorgesehen, die für eine parallele Lage des Arretierelementes zur Reifenflanke Sorge tragen.

Der Erfindung liegt die Aufgabe zugrunde, ein Arretierelement der in Betracht gezogenen Gattung zu schaffen, das die Betätigung von Einstell- oder Spannketten von Reifenketten schwerer Bauart erleichtert und das sich in der Spannposition sowohl bei paralleler als auch bei senkrechter Anordnung zur Reifenflanke über eine Beschädigungen des Reifens verhindernde, ausreichend große Fläche an der Flanke des mit der Reifenkette bestückten Reifens abstützen kann. Die vorstehende Aufgabe wird erfindungsgemäß dadurch gelöst, daß der Grundkörper drei jeweils unter einem Winkel ineinander übergehende Abschnitte aufweist, daß im ersten Abschnitt die Anschlußöse und eines der Enden der Durchziehöffnung, im zweiten Abschnitt der Hauptteil der Durchziehöffnung und im dritten Abschnitt der Arretierungsschlitz und das andere Ende der Durchziehöffnung angeordnet sind und daß der zweite Abschnitt mit Seitenwänden versehen ist, die in den Bereich des ersten und dritten Abschnittes übergehende und dort abfallende Ausläufer aufweisen.

Das erfindungsgemäße Arretierelement ermöglicht ein schnelles und bequemes Sichern und Lösen von Einstell- oder Spannketten, wobei die hochgezogenen Seitenwände des Grundkörpers bei einer den Einstell- bzw. Spannvorgang erleichternden Anordnung des Arretierelementes die von diesem auf die Reifenflanke ausgeübten Flächenpressungen in vertretbaren, die Reifen schonenden Grenzen halten.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform der Erfindung. Es zeigen:
Fig. 1 die Draufsicht auf ein Arretierelement,
Fig. 2 eine Stirnansicht des Arretierelementes gemäß Figur 1,
Fig. 3 einen Schnitt längs der Linie III-III in Figur 1,
Fig. 4 in perspektivischer Darstellung eine die große Durchziehöffnung des Arretierelementes passierende Einstellkette und
Fig. 5 die Lage der in Figur 4 gezeigten Einstellkette in ihrer arretierten Position.

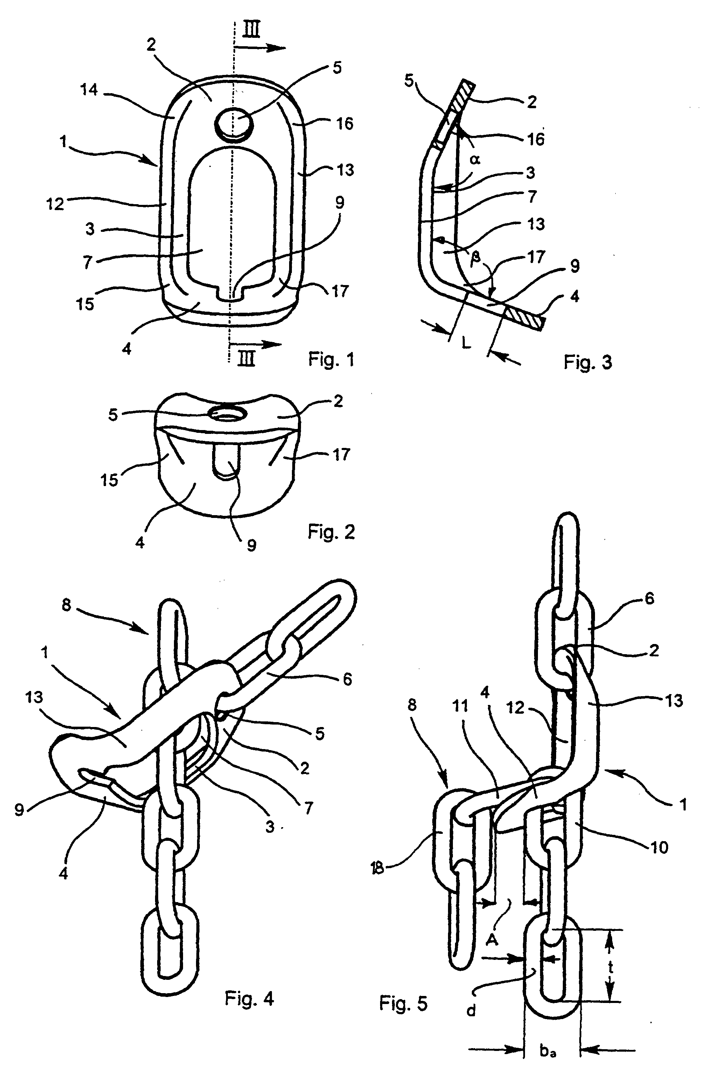

Das in den Figuren dargestellte Arretierelement besitzt einen Grundkörper 1 mit drei Abschnitten 2, 3 und 4. Der erste Abschnitt 2 schließt mit dem zweiten Abschnitt 3 einen stumpfen Winkel α in der Größenordnung von etwa 155° ein, während der Winkel β zwischen dem zweiten und dem dritten Abschnitt etwa 110° beträgt. In eine Anschlußöse 5 des Abschnittes 2 ist ein bei montierter Reifenkette im Bereich der Flanke eines Fahrzeugreifens gelegenes ovales Kettenglied 6 eingeschweißt. Im größten Abschnitt 3 des Grundkörpers 1 befindet sich eine Durchziehöffnung 7 für eine Einstell- oder Spannkette 8, wobei die bogenförmigen Enden der Durchziehöffnung 7 in die einander zugewandten Zonen der Abschnitte 2 und 4 ragen. Der Abschnitt 4 schließlich weist einen in die Durchziehöffnung 7 übergehenden Arretierungsschlitz 9 auf, in den ein Glied 10 der Einstell- oder Spannkette 8 eingeführt und durch das auf dieses Glied 10 folgende Glied 11 in der in Figur 5 dargestellten Position gesichert werden kann.

Beim praktischen Einsatz sollten die Abschnitte 2, 3 und 4 senkrecht zur Reifenflanke zu liegen kommen, um dabei die Flächenpressung zwischen der Flanke des Fahrzeugreifens und dem Arretierelement klein zu halten, ist dessen Grundkörper 1 mit senkrecht zum Abschnitt 3 orientierten Seitenwänden 12 und 13 versehen, über die sich das Arretierelement an der Reifenflanke abstützen kann. Die Seitenwände 12,13 weisen in die Abschnitte 2 und 4 übergehende Ausläufer 14,15 bzw. 16,17 auf, die der Steifigkeit des in seinem Grundaufbau wannenförmigen Arretierungselementes zugutekommen. Die beschriebene Form begünstigt die Ausbildung des Arretierelementes als Stanzteil und mithin eine kostengünstige, seinem Massenartikelcharakter Rechnung tragende Fertigung.

Wie aus Figur 5 erkennbar, ist der Abstand A zwischen dem Schenkel des Arretierungsschlitzes 9 und dem in der Verlängerung der Längsachse des Arretierungsschlitzes 9 gelegenen Scheitel des Abschnittes 4 des Grundkörpers im wesentlichen gleich der um die zweifache Nenndicke d verminderten Teilung t der Glieder der Einstell- oder Spannkette 8, während die Länge L des Arretierungsschlitzes 9 kleiner als die um die Nenndicke d verminderte äußere Breite bₐ der Glieder der Einstell- oder Spannkette 8 ist. Aufgrund der gewählten Größe des Abstandes A legt sich das Glied 18 mit einem seiner Längsschenkel gegen den Scheitel des Abschnittes 4 an und verhindert so eine Linearbewegung des Gliedes 10 im Arretierungsschlitz 9.

## Patentansprüche

1. Arretierelement für die Einstell- oder Spannkette einer Reifenkette mit einem Grundkörper (1), der eine Anschlußöse (5) zu seiner Befestigung an einem im Bereich der Reifenflanke gelegenen Glied (6) der Reifenkette aufweist und mit einer Durchziehöffnung (7) sowie einem in diese mündenden Arretierungsschlitz (9) für die Einstell- oder Spannkette versehen ist, **dadurch gekennzeichnet, daß** der Grundkörper (1) drei jeweils unter einem Winkel (α,β) ineinander übergehende Abschnitte (2,3,4) aufweist, daß im ersten Abschnitt (2) die Anschlußöse (5) und eines der Enden der Durchziehöffnung (7), im zweiten Abschnitt (3) der Hauptteil der Durchziehöffnung (7) und im dritten Abschnitt (4) der Arretierungsschlitz (9) und das andere Ende der Durchziehöffnung (7) angeordnet sind und daß der zweite Abschnitt (3) mit Seitenwänden (13,12) versehen ist, die in den Bereich des ersten und dritten Abschnittes (2 bzw. 4) übergehende und dort abfallende Ausläufer (14,15; 16,17) aufweisen.

2. Arretierelement nach Anspruch 1, **dadurch gekennzeichnet, daß** sein Grundkörper (1) als Tiefziehteil ausgebildet ist.

3. Arretierelement nach Anspruch 1 oder 2, **dadurch gekennzeichnet, daß** sein Grundkörper (1) im wesentlichen die Form einer im Bereich ihres Bodens und ihrer sich gegenüberliegenden Stirnwände mit Öffnungen versehenen Wanne hat.

4. Arretierelement nach einem oder mehreren der Ansprüche 1 bis 3, **dadurch gekennzeichnet, daß** der Abstand (A) zwischen dem Scheitel des Arretierungsschlitzes (9) und dem in der Verlängerung der Längsachse des Arretierungsschlitzes (9) gelegenen Scheitel des Außenrandes des dritten Abschnittes (4) des Grundkörpers (1) im wesentlichen gleich der um die zweifache Nenndicke (d) verminderten Teilung (t) der Glieder der Einstell- oder Spannkette (8) ist.

5. Arretierelement nach einem oder mehreren der Ansprüche 1 bis 4, **dadurch gekennzeichnet, daß** die Länge (L) des Arretierungsschlitzes (9) kleiner als die um die Nenndicke (d) verminderte äußere Breite (bₐ) der Glieder der Einstell- oder Spannkette (8) ist.

6. Arretierelement nach einem oder mehreren der Ansprüche 1 bis 5, **dadurch gekennzeichnet, daß** die Winkel (α,β), unter denen die drei Abschnitte (2,3,4) des Grundkörpers (1) ineinander übergehen, größer als 90'sind.

7. Arretierelement nach einem oder mehreren der Ansprüche 1 bis 6, **dadurch gekennzeichnet, daß** die Durchziehöffnung (7) oval ausgebildet ist.

8. Arretierelement nach einem der Ansprüche 1 bis 7, **dadurch gekennzeichnet, daß** die Durchziehöffnung (7) sich über den größten Teil des zweiten Abschnittes (3) des Grundkörpers (1) erstreckt.

9. Arretierelement nach einem oder mehreren der Ansprüche 1 bis 8, **dadurch gekennzeichnet, daß** die Seitenwände (13,12) senkrecht zum zweiten Abschnitt (3) des Grundkörpers (1) orientiert sind.

## Claims

1. Locking element for the setting or tensioning chain of a tyre chain, having a basic body (1) which has a connecting eye (5) for fastening it to a link (6) of the tyre chain positioned in the region of the tyre flank, and is provided with a threading opening (7) and with a locking slot (9) which leads into the latter and is intended for the setting or tensioning chain, **characterized in that** the basic body (1) has three sections (2, 3, 4) which respectively merge into one another at an angle (α, β), **in that** the connecting eye (5) and one of the ends of the threading opening (7) are arranged in the first section (2), the main part of the threading opening (7) is arranged in the second section (3) and the locking slot (9) and the other end of the threading opening (7) are arranged in the third section (4), and **in that** the second section (3) is provided with side walls (13, 12) which have spurs (14, 15; 16, 17) which merge into the region of the first and third sections (2 and 4) where they drop away.

2. Locking element according to Claim 1, **characterized in that** its basic body (1) is designed as a deep-drawn part.

3. Locking element according to Claim 1 or 2, **characterized in that** its basic body (1) is essentially in the shape of a trough which is provided with openings in the region of its bottom and of its opposite end walls.

4. Locking element according to one or more of Claims 1 to 3, **characterized in that** the distance (A) between the vertex of the locking slot (9) and the vertex of the outer edge of the third section (4) of the basic body (1), which vertex is positioned in the extension of the longitudinal axis of the locking slot (9), is essentially equal to the division (t), which is reduced by twice the nominal thickness (d), of the links of the setting or tensioning chain (8).

5. Locking element according to one or more of Claims 1 to 4, **characterized in that** the length (L) of the locking slot (9) is smaller than the outer width (bₐ), which is reduced by the nominal thickness (d), of the links of the setting or tensioning chain (8).

6. Locking element according to one or more of Claims 1 to 5, **characterized in that** the angles (α, β) at which the three sections (2, 3, 4) of the basic body (1) merge into one another are greater than 90°.

7. Locking element according to one or more of Claims 1 to 6, **characterized in that** the threading opening (7) is of oval design.

8. Locking element according to one of Claims 1 to 7, **characterized in that** the threading opening (7) extends over most of the second section (3) of the basic body (1).

9. Locking element according to one or more of Claims 1 to 8, **characterized in that** the side walls (13, 12) are orientated perpendicularly with respect to the second section (3) of the basic body (1).

## Revendications

1. Elément d'arrêt pour la chaîne de réglage ou de serrage d'une chaîne de pneu avec un corps de base (1), qui présente un anneau de raccordement (5) pour sa fixation sur un maillon (6) posé dans la zone de flanc du pneu de la chaîne de pneu et est pourvu d'une ouverture de passage (7) et d'une fente d'arrêt (9) débouchant dans cette ouverture pour la chaîne de réglage ou la chaîne de serrage, **caractérisé en ce que** le corps de base (1) présente trois tronçons (2, 3, 4) qui s'imbriquent les uns dans les autres respectivement en formant un angle (α, β), **en ce que** l'anneau de raccordement (5) et l'une des extrémités de l'ouverture de passage (7) sont disposés dans le premier tronçon (2), la partie principale de l'ouverture de passage (7) dans le second tronçon (3) et la fente d'arrêt (9) et l'autre extrémité de l'ouverture de passage (7) dans le troisième tronçon (4) et **en ce que** le second tronçon (3) est pourvu de parois latérales (13, 12), qui présentent des contreforts (14, 15 ; 16, 17) qui font place à la zone du premier et du troisième tronçons (2 et 4) et descendent à cet endroit.

2. Elément d'arrêt selon la revendication 1, **caractérisé en ce que** son corps de base (1) est conçu comme une pièce emboutie.

3. Elément d'arrêt selon la revendication 1 ou 2, **caractérisé en ce que** son corps de base (1) a sensiblement la forme d'une cuve pourvue d'ouvertures dans la zone de son fond et de ses parois avant qui se font face.

4. Elément d'arrêt selon l'une quelconque ou plusieurs des revendications 1 à 3, **caractérisé en ce que** la distance (A) entre le sommet de la fente d'arrêt (9) et le sommet, situé dans le prolongement de l'axe longitudinal de la fente d'arrêt (9), du bord extérieur du troisième tronçon (4) du corps de base (1) est sensiblement identique à l'espace intérieur (t) réduit de la double épaisseur nominale (d) des maillons de la chaîne de réglage ou de serrage (8).

5. Elément d'arrêt selon l'une quelconque ou plusieurs des revendications 1 à 4, **caractérisé en ce que** la longueur (L) de la fente d'arrêt (9) est inférieure à la largeur (bₐ) extérieure réduite de l'épaisseur nominale (d) des maillons de la chaîne de réglage ou de serrage (8).

6. Elément d'arrêt selon l'une quelconque ou plusieurs des revendications 1 à 5, **caractérisé en ce que** les angles (α, β), avec les lesquels les trois tronçons (2, 3, 4) du corps de base (1) sont imbriqués entre eux, sont supérieurs à 90°.

7. Elément d'arrêt selon l'une quelconque ou plusieurs des revendications 1 à 6, **caractérisé en ce que** l'ouverture de passage (7) est conçue avec une forme ovale.

8. Elément d'arrêt selon l'une quelconque des revendications 1 à 7, **caractérisé en ce que** l'ouverture de passage (7) s'étend sur la plus grande partie du second tronçon (3) du corps de base (1).

9. Elément d'arrêt selon l'une quelconque ou plusieurs des revendications 1 à 8, **caractérisé en ce que** les parois latérales (13, 12) sont orientées perpendiculairement au second tronçon (3) du corps de base (1).
